## Europäisches Patentamt
## European Patent Office
## Office européen des brevets

(11) Numéro de publication: **0 307 309**
**A1**

(12) # DEMANDE DE BREVET EUROPEEN

(21) Numéro de dépôt: **88402252.6**

(22) Date de dépôt: **08.09.88**

(51) Int. Cl.⁴: **C 23 F 11/08**
C 09 K 5/00

(30) Priorité: **09.09.87 FR 8712483**

(43) Date de publication de la demande:
**15.03.89 Bulletin 89/11**

(84) Etats contractants désignés: **DE GB IT**

(71) Demandeur: **ETAT-FRANCAIS représenté par le DELEGUE GENERAL POUR L'ARMEMENT (DPAG) Bureau des Brevets et Inventions de la Délégation Générale pour l'Armement 26, Boulevard Victor F-75996 Paris Armées (FR)**

(72) Inventeur: **Collin, Daniel 68, Rue Branly F-44000 Nantes (FR)**

**Morisson, Michel 41, Rue de Pornic F-44830 Bouaye (FR)**

(54) **Composition inhibitrice de corrosion pour métaux.**

(57) La présente invention concerne une composition inhibitrice de corrosion, notamment de métaux, destinée à être ajoutée un fluide antigel ou caloporteur constituant un milieux aqueux utilisé notamment dans des circuits de refroidissement.

Elle est caractérisée en ce qu'elle est constituée, en combinaison, les pourcentages étant exprimés relativement à la masse, de :

0,15 à 0,5% de nitrite de sodium,

0,01 à 0,1% de tétraborate de sodium,

0,01 à 0,05% de nitrate de sodium,

0,01 à 0,05% de phosphate de sodium,

0,01 à 0,05% de benzotriazole,

0,05 à 0,5% de silicate de sodium ou 0,01 à 0,1% de tétraméthylènediamine,

le complément étant constitué par le milieu aqueux.

Application au traitement des liquides de refroidissement des moteurs Diesel.

EP 0 307 309 A1

Bundesdruckerei Berlin

**Description**

La présente invention concerne une composition inhibitrice de corrosion de métaux destinée à être ajoutée à un fluide antigel ou caloporteur constituant un milieu aqueux utilisé dans les circuits fermés de refroidissement, notamment dans les moteurs à combustion interne, par exemple des moteurs Diesel fonctionnant dans des conditions sévères .

Il faut rappeler que de façon générale, les principaux facteurs responsables de la corrosion (corrosion par piqures, caverneuses ou sous dépôt dans un milieu aqueux) sont les halogènes et tout spécialement les chlorures, puis l'oxygène qui intervient dans toutes les formes de corrosion par réaction cathodique, et enfin la température, car les phénomènes s'accélèrent quand la température augmente (la température peut localement être nettement supérieure à 100°C dans le circuit de refroidissement d'un moteur à combustion interne).

On connait dans le commerce de nombreux additifs inhibiteurs de corrosion pour circuits de refroidissement, mais aucun ne permet de résoudre parfaitement les problèmes posés simultanément dans l'application aux milieux aqueux refroidissant des moteurs à combustion interne. En effet, il faut à la fois prendre en compte tous les phénomènes électrochimiques qui se produisent au niveau des divers interfaces entre les nombreux métaux ou alliages constituant le circuit de refroidissement du moteur, en sachant que généralement, chacun des inhibiteurs connu de corrosion s'applique spécifiquement à un métal, alliage ou groupe de métaux présentant des propriétés de passivation voisines. Il faut aussi s'affranchir des difficultés posées par la stabilité des mélanges inhibiteurs de corrosion aux hautes températures de fonctionnement des moteurs à combustion interne, celles-ci pouvant atteindre localement plusieurs centaines de degrés.

Une condition supplémentaire est posée par l'endurance exigée pour les moteurs Diesel de fort cylindrée, par exemple marins, utilisés dans un environnement sévère, ce qui implique une stabilité du mélange inhibiteur dans le temps et une constance de son pH, nécessaire aussi bien pour la tenue en température que pour éviter les variations des phénomènes électrochimiques de surface ou d'interface évoqués plus haut. Il faut de plus assurer une excellente compatibilité chimique avec les additifs antigel ou les fluides caloporteurs utilisés dans les circuits de refroidissement. Enfin, il faut ajouter les impératifs de non toxicité et de faible coût qui se traduisent généralement par l'abaissement souhaitable des taux de concentration des additifs utilisés.

Les publications montrent généralement des mélanges inhibiteurs associant des sels minéraux tels les métaborates, nitrites, nitrates ou autres phosphates de métaux alcalins, avec des composés organiques à base par exemple de triazoles ou d'amines.

Le brevet FR 2 300 141 décrit un inhibiteur de corrosion et de dépôt de tartre dans des circuits d'eau de refroidissement, à base de dérivés de carboxy-alcanes et de phosphore, mais qui ne présente qu'une efficacité relative aux pH élevés et seulement pour des circuits en acier.

Le brevet FR 2 455 636 montre un inhibiteur de corrosion pour circuits de refroidissement de moteurs, comprenant principalement de sels de l'acide orthophosphorique et de sels alcalins d'acides carboxyliques. Ce mélange s'avère efficace pour empêcher la corrosion des composés métalliques d'aluminium, et des variantes comprenant d'autres additifs protégent la fonte ou les métaux cuivreux. Il s'avère cependant que ce mélange n'est pas adapté pour empêcher la corrosion de l'acier, et implique des concentrations relativement élevées en constituants principaux.

Le brevet FR 2 083 816 décrit un autre inhibiteur de corrosion, comprenant une résine échangeuse d'ion, une assez forte proportion de métaborate de métal alcalin, et un composé organique inhibiteur, présentant l'avantage d'un pH constant, mais qui ne parvient pas à éviter la corrosion d'un grand nombre de métaux utilisés simultanément.

Bon nombre d'autres brevets montrent des mélanges inhibiteurs présentant des compositions très variées qui répondent pour la plupart à un besoin spécifique et ne s'appliquent pas à la protection d'une large gamme de produits métalliques.

La présente invention pallie les inconvénients de la technique relevés plus haut en proposant une composition inhibitrice de corrosion efficace et optimum pour la protection, contre les effets d'un milieux aqueux caloporteur ou contenant un antigel, de la plupart des métaux ou alliages pouvant être des matériaux constitutifs de conduits de liquide de refroidissement, notamment de moteurs à combustion interne. La présente invention se propose encore d'améliorer l'efficacité de ces compositions inhibitrices, notamment lorsque ces métaux et alliages sont reliés entre eux, ce qui est bien sûr le plus souvent le cas dans de tels circuits.

Pour ce faire, la présente invention a pour objet une composition inhibitrice de corrosion, notamment de métaux, destinée à être ajoutée un fluide antigel ou caloporteur constituant un milieux aqueux utilisé notamment dans des circuits de refroidissement, caractérisé en ce qu'elle est constituée, en combinaison, les pourcentages étant exprimés relativement à la masse, de :

0,15 à 0,5% de nitrite de sodium,

0,01 à 0,1% de tétraborate de sodium,

0,01 à 0,05% de nitrate de sodium,

0,01 à 0,05% de phosphate de sodium,

0,01 à 0,05% de benzotriazole,

0,05 à 0,5% de silicate de sodium ou 0,01 à 0,1% de tétraméthylènediamine, le complément étant constitué par le milieu aqueux.

Suite à de nombreux essais à partir des combinaisons connues de nitrites, borates et phosphates auxquelles on ajoute un ou plusieurs composés organiques ou minéraux, tels que des amines normales ou à longues chaines carbonées, des dérivés des polyamines ou des alcools acétyléniques, on a découvert de façon surprenante que la composition inhibitrice selon l'invention révèle un puissant effet de synergie entre les divers constituants en faibles concentrations.

On constate donc que cette composition est remarquable par la faible concentration des sels dissous, et la grande stabilité de son pH, soit environ 8,3, dans le temps.

On constate encore de façon surprenante qu'une dilution accidentelle, pouvant aller jusqu'à 10, n'altère pas sensiblement ses qualités inhibitrices, et que le pH se maintient à sa valeur initiale. On a mesuré un écart de 0,1 unité de pH pour une dilution de 1 à 16.

Un autre avantage réside dans le fait que cette composition est sans agression sur les joints en élastomères qui peuvent se présenter dans le circuit de refroidissement.

Des résultats particulièrement performants sont obtenus en milieu aqueux contenant moins de 10 mg par litre d'ions chlorures.

La préparation de la composition selon l'invention se fait industriellement par simple mélange des constituants, en tenant compte de la solubilité des uns par rapport aux autres.

Le stockage et le transport ne posent pas de problèmes particuliers, tandis que le mode d'emploi est facilité puisque les propriétés avantageuses restent constantes dans une large gamme de dilution.

La description suivante permet d'établir les avantages de la composition inhibitrice selon l'invention par rapport à quelques compositions classiques du commerce.

Divers essais ont été menés sur les compositions suivantes :

A - composition selon l'invention contenant du silicate de sodium,

B - composition selon l'invention contenant en variante du tétraméthylènediamine,

C - mélange inhibiteur aqueux connu, contenant, en masse, 65% de nitrite de sodium et 20% de borate de sodium,

D - mélange inhibiteur aqueux connu, contenant, en masse, 65% de chromate de sodium et 25% de borate de sodium,

E - huile soluble anti corrosive,

F - mélange inhibiteur aqueux connu contenant, en masse, 60% de nitrite de sodium, 20% de borate de sodium et 10% de fluosilicate de sodium.

Les composés C à F ont seuls été sélectionnés parmi un très grand nombre de produits testés, pour établir des résultats comparatifs significatifs.

En ce qui concerne le mode opératoire, les bains A à F ci-dessus sont introduits dans un circuit fermé, dont la températur est régulée par exemple à 80°C, comprenant notamment un ballon dans lequel on a placé des éprouvettes ou échantillons constitués par les divers métaux et alliages dont on étudie la corrosion. De façon classique, ces éprouvettes sont constituées par des plaquettes parallélipédiques (longueur 45 mm, largeur 25 mm, épaisseur 3mm) trouées (6 mm de diamètre) juxtaposées, réunies et resserrées le long d'un axe en téflon supporté par un étrier, et cependant séparées par des rondelles de téflon. On a utilisé des éprouvettes constituées respectivement par des plaquettes d'acier, de fonte, de bronze et d'alliage d'aluminium au silicium.

Un examen visuel montre immédiatement la corrosion, qui est confirmée après brossage et pesée des éprouvettes.

On donne ci-dessous, d'une part les pertes relatives de masse cumulées éprouvettes suivant la formule :

$$\Sigma \, \Delta P = \Sigma \left( \frac{Mo - M}{Mo} \right) . x \, 10^5 \quad ,$$

où Mo est la masse initiale de l'éprouvette et M sa masse après le test de dégradation et les variations de pH des bains, du début $_{(T=0)}$ jusqu'à la fin des essais au bout de 1000 heures (T = 1000)

3

| BAINS | $\Sigma \Delta p$ | pH pour T = 0 | pH pour T = 1000 |
|-------|------|---------------|------------------|
| A | 24,9 | 8,25 | 8,25 |
| B | 49,8 | 8,00 | 7,70 |
| C | 2454 | 8,90 | 8,80 |
| D | 1156,2 | 9,20 | 9,30 |
| E | 683,3 | 8,75 | 7,15 |
| F | 77,3 | 11,55 | 9,65 |

Après avoir constaté un bon comportement des quatre éprouvettes dans les solutions bains A et B, on montre que les courbes de polarisation de chacune des éprouvettes présentent toutes un palier de passivation pour des valeurs de ph comprises entre 8,0 et 9 avec une intensité de courant à l'état passif inférieure à µA/cm2.

Pour des pH inférieurs à 8,0, le profil des courbes est plus tourmenté avec notamment l'apparition soit de pics d'activation, soit d'une augmentation de l'intensité du courant à l'état passif, et la position des potentiels de dissolution montre dans tous les cas que le couplage galvanique se fera au détriment de l'alliage léger, alliage le moins noble, mais avec une intensité de courant de coulage faible (de quelques µA/cm2) égale à l'intensité du courant à l'état passif.

Par ailleurs, à partir des courbes de couplages, en comparant les différents bains, on montre que le potentiel de corrosion libre le plus noble est obtenu avec le bain A (-510 mV contre - 1043 mV pour le bain (C).

L'intensité de corrosion calculée en µA/cm2 la plus faible est obtenue avec le bain A (0,03 µA/cm2 contre 4,12 µA/cm2 pour le bain E et 1139 µA/cm2 pour le bain C).

La vitesse de corrosion, calculée en micron par an, la plus faible, selon loi de Faraday, est obenue avec le bain A (0,25 µm/an contre 45,2 µm/an pour le bain E et 12497 µm/an pour le bain C).

En examinant les faciès d'attaque on montre que seul l'échantillon testé avec le produit A est exempt de toute trace de corrosion, les traits de polissage étant encore très apparents. Ces examens des faciès d'attaque confirment les tests électrochimiques.

L'expertise du circuit de refroidissement des moteurs Diesel testés après au moins 10000 heures de fonctionnement avec le produit A ne révèle aucune corrosion, les états de surfaces initiaux ne sont pas modifiés. L'expérimentation sur différents moteurs Diesel actuellement utilisés confirme l'ensemble des tests de laboratoire.

Les compositions inhibitrices selon l'invention sont donc particulièrement adaptées comme produit de traitement de l'eau de réfroidissement des moteurs Diesel à culasse en alliage léger.

**Revendications**

1 - Composition inhibitrice de corrosion, notamment de métaux, destinée à être ajoutée un fluide antigel ou caloporteur constituant un milieux aqueux utilisé notamment dans des circuits de refroidissement, caractérisé en ce qu'elle est constituée, en combinaison, les pourcentages étant exprimés relativement à la masse, de :

0,15 à 0,5% de nitrite de sodium,
0,01 à 0,1% de tétraborate de sodium,
0,01 à 0,05% de nitrate de sodium,
0,01 à 0,05% de phosphate de sodium,
0,01 à 0,05% de benzotriazole,
0.05 à 0,5% de silicate de sodium ou 0,01 à 0,1% de tétraméthylènediamine,
le complément étant constitué par le milieu aqueux.

4

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | EP-A-0 048 430  (HOECHST AG)<br>* Revendication 1; page 6, lignes 4-21 *<br>--- | 1 | C 23 F  11/08<br>C 09 K   5/00 |
| X | US-A-4 333 843  (P.L. WING)<br>* Revendications 1,8; colonne 2, lignes 31-48 *<br>--- | 1 | |
| X | FR-A-2 180 833  (I.C.I.)<br>* Revendications 1,4,8; tableau I; page 2 *<br>--- | 1 | |
| X | EP-A-0 042 937  (BASF WYANDOTTE)<br>* Revendications *<br>--- | 1 | |
| X | US-A-4 149 985  (D.A. WILSON)<br>* Revendications 1-3; colonne 1, ligne 60 - colonne 2, ligne 45 *<br>--- | 1 | |
| A | EP-A-0 182 057  (TEXACO DEVELOPMENT CORP.)<br>--- | | |
| A | US-A-4 455 248  (D.L. WOOD)<br>--- | | DOMAINES TECHNIQUES RECHERCHES (Int. Cl.4) |
| E | US-A-4 714 564  (M. KHOBAIA)<br>* Revendications *<br>----- | 1 | C 23 F  11/00<br>C 09 K   5/00 |

Le présent rapport a été établi pour toutes les revendications

| Lieu de la recherche | Date d'achèvement de la recherche | Examinateur |
|---|---|---|
| LA HAYE | 14-12-1988 | TORFS F.M.G. |

EPO FORM 1503 03.82 (P0402)

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
...........................................................
& : membre de la même famille, document correspondant